# EUROPEAN PATENT APPLICATION

(11) **EP 2 980 745 A1**
(43) Date of publication of application: **03.02.2016**
(21) Application number: 15178360.2
(22) Date of filing: 24.07.2015
(51) Int. Cl.: G06Q 30/02, G06K 19/077, H04W 4/00

(54) **COMMODITY INFORMATION DISPLAYING SYSTEM, INFORMATION PROCESSING APPARATUS AND CONTROL METHOD FOR THE SAME**

(30) Priority: 28.07.2014 JP 2014153255
(71) Applicant: Toshiba TEC Kabushiki Kaisha, Tokyo 141-0032 (JP)
(72) Inventor: KOGURE, Kazunari, Shinagawa-ku, Tokyo 141-0032 (JP); IKEDA, Yoshihiko, Shinagawa-ku, Tokyo 141-0032 (JP); NAMBU, Kazuya, Shinagawa-ku, Tokyo 141-0032 (JP); ISHIKAWA, Seiji, Shinagawa-ku, Tokyo 141-0032 (JP); TAKAHASHI, Shuji, Shinagawa-ku, Tokyo 141-0032 (JP); MOCHIZUKI, Hiroki, Shinagawa-ku, Tokyo 141-0032 (JP); TOYAMA, Tadatomo, Shinagawa-ku, Tokyo 141-0032 (JP); SUZUKI, Kenya, Shinagawa-ku, Tokyo 141-0032 (JP); MORITA, Ryu, Shinagawa-ku, Tokyo 141-0032 (JP)
(74) Representative: Takeuchi, Maya

(57) **Abstract**

In accordance with an embodiment, a commodity information displaying system comprises a plurality of shelf label devices, a portable terminal and an information processing apparatus. The portable terminal receives a recognition code from one of the shelf label devices. The portable terminal notifies the recognition code to the information processing apparatus. The information processing apparatus acquires at least the future information if future information is associated with the notified recognition code, and acquires the current information if future information is not associated with the notified recognition code while current information is associated with the notified recognition code. The information processing apparatus transmit the acquired information to the portable terminal. The portable terminal displays a screen based on the information from the information processing apparatus.

## Description

### FIELD

Embodiments described herein relate generally to a commodity information displaying system, an information processing apparatus and a control method for the same.

### BACKGROUND

The use of a shelf label apparatus (electronic shelf label) on which commodity information such as sales price of commodity and the like are displayed through an electronic display device including electronic paper becomes active.

However, when adopting such a shelf label apparatus, small size, low price and low power consumption are desired. In addition, from this point of view, the size of the display device is limited, and thus sometimes information cannot be displayed completely.

Thus, it is desired to prompt more information than the information that can be displayed by the display device of the shelf label apparatus to a customer.

### BRIEF DESCRIPTION OF THE DRAWINGS

Fig. 1 is a block diagram illustrating a commodity information displaying system according to an embodiment;
Fig. 2 is a perspective view illustrating an appearance of a shelf label device shown in Fig. 1;
Fig. 3 is a diagram illustrating an example of the content of an association table shown in Fig. 1;
Fig. 4 is a diagram illustrating another example of the content of an association table shown in Fig. 1;
Fig. 5 is a diagram illustrating an example of a display screen on which current information is displayed;
Fig. 6 is a diagram illustrating an example of a display screen on which future information is displayed;
Fig. 7 is a flowchart illustrating a control processing carried out by a CPU of a portable terminal shown in Fig. 1; and
Fig. 8 is a flowchart illustrating a control processing carried out by a CPU of an information processing apparatus shown in Fig. 1.

### DETAILED DESCRIPTION

To this end, there is provided a commodity information displaying system, comprising: a shelf label device configured to be installed in display shelves which displays a commodity; a portable terminal; and an information processing apparatus.

The shelf label devices may comprise: a recognition code storage section which stores a recognition code corresponding to the commodity, and a first transmission section which transmits the recognition code stored in the recognition code storage section to the portable terminal.

The portable terminal may comprise: a first reception section which receives the recognition code transmitted by the first transmission section, and a first notification section which notifies the information processing apparatus of the recognition code received by the first reception section.

The information processing apparatus may comprise: a first storage section which stores current information associated with a recognition code, the current information representing the information of a commodity at the present time, a second storage section which stores future information associated with a recognition code, the future information representing information of a commodity in the future, an acquisition section acquires at least the future information if the second storage section stores the future information associated with the recognition code notified by the first notification section, and acquires the current information if the second storage section stores no future information associated with the recognition code notified by the first notification section and stores the current information associated with the recognition code notified by the first notification section, and a second notification information notifies the portable terminal of the information acquired by the acquisition section, and, the portable terminal further comprises a display section which displays a screen based on the information notified by the second notification section.

The acquisition section respectively acquires the current information and the future information if the current information and the future information are respectively associated with the recognition code notified by the first notification section.

The first transmission section may transmit the recognition code wirelessly when the portable terminal is adjacent to the shelf label device provided with the first transmission section.

The future information may be information that can enable a screen on which it is displayed through the display section to be a screen motivating the customer who glances the screen to come to the store again in the future.

The present invention further relates to an information processing apparatus. The information processing apparatus comprises: a first storage section configured to store current information associated with a recognition code, the current information representing the information of a commodity at the present time, a second storage section which stores future information associated with a recognition code, the future information representing information of a commodity in the future, an acquisition section configured to acquire, when the recognition code is notified from the portable terminal, at least the future information if the second storage section stores the future information associated with the recognition code notified by the first notification section, and acquire the current information if the current information if the second storage section stores no future information associated with the recognition code notified by the first notification section and stores the current information associated with the recognition code notified by the first notification section, and a notification information configured to notify the portable terminal of the information acquired by the acquisition section.

The invention further relates to an information processing method, comprising: a first storage step of storing current information associated with a recognition code, the current information representing the information of a commodity at the present time, a second storage step in which future information associated with a recognition code is stored, the future information representing information of a commodity in the future, an acquisition step of acquiring, when the recognition code is notified from a portable terminal, at least the future information if the future information associated with the notified recognition code is stored at the second storage step, and acquiring the current information if the current information if no future information associated with the notified recognition code and the current information associated with the recognition code notified by the first notification section are stored at the second storage step, and a notification information step of notifying the portable terminal of the information acquired at the acquisition step.

In accordance with an embodiment, a commodity information displaying system includes a shelf label device comprising a recognition code storage section and a first transmission section, a portable terminal comprising a first reception section, a first notification section and a display section, and an information processing apparatus comprising a first association storage section, a second association storage section, an acquisition section and a second notification section. The recognition code storage section stores one of recognition codes for recognizing each of the plurality of commodities. The first transmission section transmits the recognition code stored by the recognition code storage section wirelessly. The first reception section receives the recognition code transmitted by the first transmission section. The first notification section notifies the information processing apparatus of the recognition code received by the first reception section. The first association storage section stores first association information representing the association of the recognition code and current information serving as information relating to a commodity recognized with the recognition code at the present time. The second association storage section stores second association information representing the association of the recognition code and future information serving as information relating to a commodity recognized with the recognition code in the future. The acquisition section acquires at least the future information if future information is associated with the recognition code notified by the first notification section in the second association information, and acquires the current information if future information is not associated with the recognition code notified by the first notification section in the second association information while the current information is associated with the recognition code notified by the first information section in the first association information. The second notification section notifies the portable terminal of the information acquired by the acquisition section. The display section displays a screen based on the information notified by the second notification section.

Hereinafter, the embodiment is described with reference to the accompanying drawings.

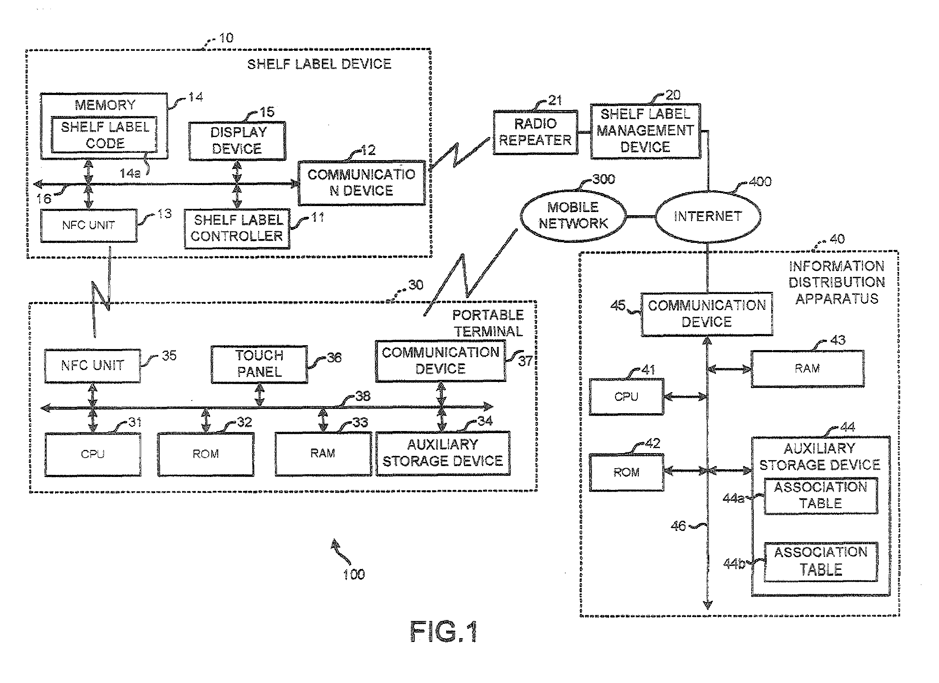

Fig. 1 is a block diagram illustrating a commodity information displaying system 100 according to the present embodiment.

The commodity information displaying system 100 provides service for enabling a customer to browse information relating to a commodity to be handled in a store such as a supermarket and the like. The commodity information displaying system 100 comprises a plurality of shelf label devices 10, a shelf label management device 20, a portable terminal 30 and an information recognition apparatus 40. Further, only one shelf label device 10 is shown in Fig. 1.

The shelf label devices 10 are installed in display shelves corresponding to each of the plurality of commodities displayed in the display shelves in the store.

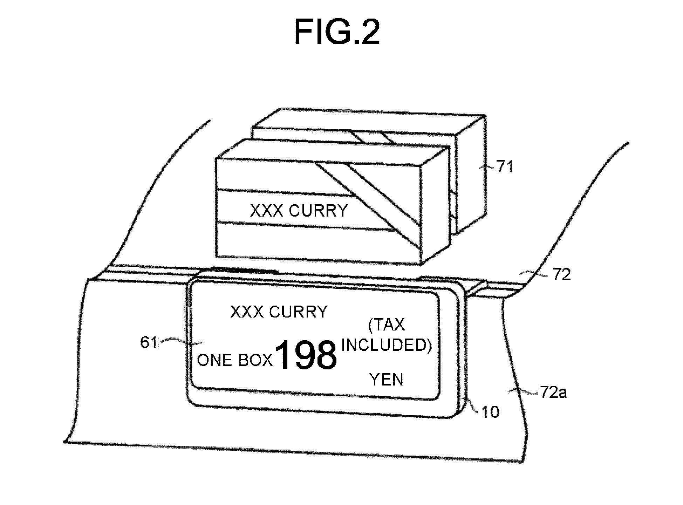

Fig. 2 is a perspective view illustrating the appearance of the shelf label device 10 on which a shelf label image 61 is displayed as an example.

The shelf label device 10 shown in Fig. 2 is installed in a leading edge 72a of a display shelf 72 in which commodities 71 are displayed. A shelf label image 61 shows a commodity name and a selling price of the commodity 71.

The shelf label management device 20 is arranged in, for example, a back-office of the store. The shelf label management device 20 can communicate with each of the plurality of shelf label devices 10 wirelessly via a radio repeater 21 to manage the shelf label devices 10. Specifically, the shelf label management device 20 manages the association of a shelf label code that is determined to be capable of recognizing each of the shelf label devices 10 and a commodity code that is determined to be capable of recognizing each commodity. In a case in which the association of the shelf label code and commodity code is changed, the shelf label management device 20 changes a shelf label image displayed on the shelf label device 10 to a shelf label image indicating information relating to a commodity recognized with a newly associated commodity code.

The portable terminal 30 has a data communication function through a mobile network 300 and an internet 400, and a data communication function through a NFC (near field communication). The portable terminal 30 is used by the customer to display commodity information.

The information processing apparatus 40 carries out a processing for transmitting commodity information and the like.

The shelf label device 10 includes a shelf label controller 11, a communication device 12, a NFC unit 13, a memory 14, a display device 15 and a transmission system 16.

The shelf label controller 11, which is a computer including a CPU (central processing unit), an ROM (read-only memory) and an RAM (random-access memory), controls all sections used to realize desired functions of the shelf label device 10.

The communication device 12 carries out a wireless communication with the radio repeater 21 such that it is possible to carry out a data communication between the shelf label controller and the shelf label management device 20. As to the communication device 12, for example, a well-known device based on IEEE802.15.4 standard may be used.

The NFC unit 13 carries out a data communication through an NFC with the portable terminal 30 that is adjacent to the shelf label device 10.

The memory 14 is a non-volatile data storage device, and stores one of the shelf label codes 14a that are determined to be capable of recognizing each of the plurality of the shelf label devices 10. The memory 14 is an example of a recognition code storage section.

The display device 15 is possible to change the display content under the control of the shelf label controller 11. For example, an electronic paper can be used as the display device 15.

The transmission system 16 transmits data between the shelf label controller 11, the communication device 12, the NFC unit 13, the memory 14, and the display device 15. The transmission system 16 may be a well-known system including various buses such as a system bus, and various interface circuits connecting these buses with each section.

The portable terminal 30 includes a CPU 31, an ROM 32, an RAM 33, an auxiliary storage device 34, a NFC unit 35, a touch panel 36, a communication device 37 and a transmission system 38. The transmission system 38 transmits data between the CPU 31, the ROM 32, the RAM 33, the auxiliary storage device 34, the NFC unit 35, the touch panel 36, and the communication device 37. The transmission system 38 may be a well-known system including various buses such as a system bus, and various interface circuits connecting these buses with each section.

The CPU 31, the ROM 32, the RAM 33 and the auxiliary storage device 34 are connected with each other through the transmission system 38 to constitute a computer.

The CPU 31 is a center part of the computer mentioned above. The CPU 31 executes a control processing for realizing desired functions of the portable terminal 30 based on an operating system stored in the ROM 32 and an application program stored in the ROM 32 or the auxiliary storage device 34. The aforementioned desired functions may be, for example, well-known functions of an existing smart phone. Further, the aforementioned desired functions are functions realized by the later-described control processing.

The ROM 32 is a main storage part of the computer mentioned above. The ROM 32 stores the aforementioned operating system and the application program. As occasion demands, the ROM 32 also stores data required to carry out various processing by the CPU 31.

The RAM 33 is also a main storage part of the computer mentioned above. The RAM 33 stores data required to carry out various processing by the CPU 31. Further, the RAM 33 is also used as a work area for the CPU 31 when various processing is carried out to store the data used temporarily in advance.

The auxiliary storage device 34 is an auxiliary storage part of the computer mentioned above. The auxiliary storage device 34 stores the application program mentioned above, the data used to carry out various processing by the CPU 31, or the data generated through a processing by the CPU 31.

The NFC unit 35 carries out a data communication through the NFC with the NFC unit 13 when the portable terminal 30 is moved close to the shelf label device 10.

The touch panel 36 includes a display device and a touch sensor. The display device displays an arbitrary screen such as a GUI screen and the like. A well-known device such as a color LCD (liquid crystal display) can be used as the display device. The touch sensor is arranged to be overlapped on the display surface of the display device. The touch sensor detects a position touched by a user on the display surface of the display device, and sends the position information to the CPU 31. A well-known device can be used as the touch sensor.

The communication device 37 carries out communication through the mobile network 300. The communication device 37 can also communicate with the information processing apparatus 40 through the mobile network 300 and the internet 400.

As the hardware of the portable terminal 30, a device in which application programs can be randomly installed such as an existing smart phone, a tablet terminal and the like can be used. Then, the portable terminal 30 can be obtained by installing a control program serving as an application program that is described in the later-described control processing in the auxiliary storage device 34 of the device by a seller or operator of the device. At this time, the control program is recorded in a removable recording medium such as a magnetic disk, a magnetic optical disk, an optical disk, a semiconductor memory and the like, or distributed to the seller or the operator via the internet. Further, the control program may be stored in the ROM 32.

The information processing apparatus 40 comprises a CPU 41, an ROM 42, an RAM 43, an auxiliary storage device 44, a communication device 45 and a transmission system 46. The transmission system 46 transmits data between the CPU 41, the ROM 42, the RAM 43, the auxiliary storage device 44, and the communication device 45. The transmission system 46 may be a well-known system including various buses such as a system bus, and various interface circuits connecting these buses with each section.

The CPU 41, the ROM 42, the RAM 43 and the auxiliary storage device 44 are connected with each other through the transmission system 46 to constitute a computer.

The CPU 41 executes a control processing for realizing desired functions of the information processing apparatus based on an operating system stored in the ROM 42 and an application program stored in the ROM 42 or the auxiliary storage device 44. One of the aforementioned desired functions is realized by the later-described control processing.

The ROM 42 stores the aforementioned operating system and the application program. As occasion demands, the ROM 42 also stores data referred to when the CPU 41 carries out various processing.

The RAM 43 stores data referred to when the CPU 41 carries out various processing. Further, the RAM 43 is also used as a work area for the CPU 41 to carry out various processing to store the data used temporarily in advance.

The auxiliary storage device 44 stores the application program mentioned above, the data used to carry out various processing by the CPU 41, or the data generated through a processing by the CPU 41. The auxiliary storage device 44 stores association tables 44a and 44b. Each of the association tables 44a and 44b is a set of data records in which file paths are associated with shelf label codes. The file path recorded in the association table 44a represents a file name and a storage location of a data file (hereinafter referred to as current file) including current information serving as information of a commodity associated with the shelf label code at the present time. The file path recorded in the association table 44b represents a file name and a storage location of a data file (hereinafter referred to as future file) including future information serving as information of a commodity associated with the shelf label code in the future. The commodity associated with the shelf label code refers to a commodity that is displayed in a display shelf in which the shelf label device 10 recognized with the shelf label code is installed. The storage location of the file path described in each of the association tables 44a and 44b may be the auxiliary storage device 44, and may also be a storage device (not shown) that can access through the internet 400. In this way, the shelf label code is an example of the recognition code for recognizing each of the plurality of commodities.

The data record contained in the association table 44a is an example of first association information. The data record contained in the association table 44b is an example of second association information. Then, the auxiliary storage device 44 is an example of the first and the second association storage section. Further, the auxiliary storage device 44 is an example of the first and the second storage device. In addition, the association tables 44a and 44b may be respectively stored in different storage device.

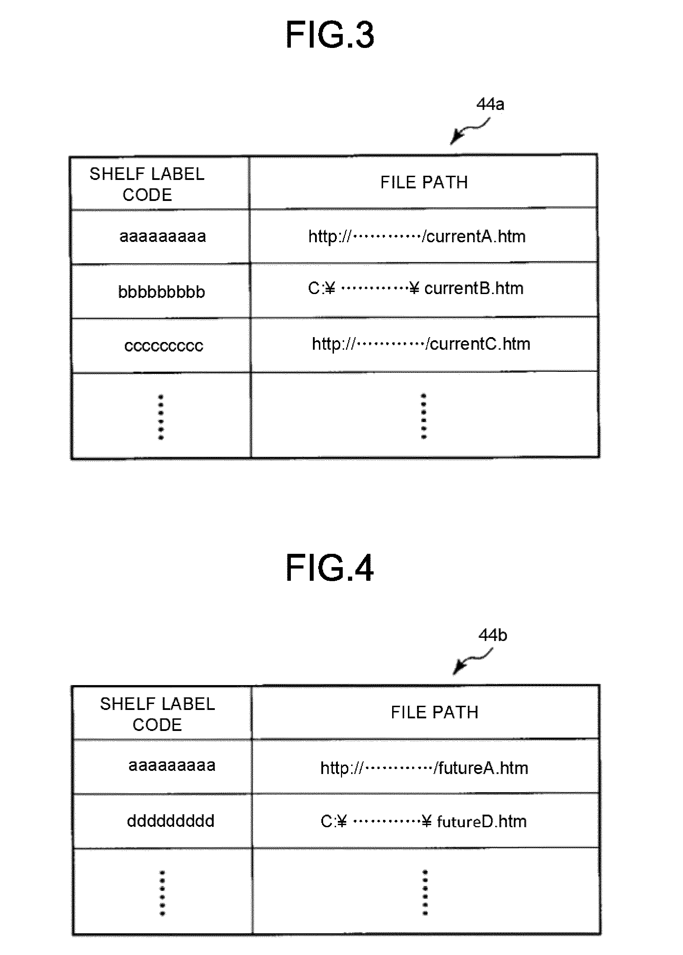

Fig. 3 is a diagram illustrating an example of the content of the association table 44a.

Fig. 4 is a diagram illustrating an example of the content of the association table 44b.

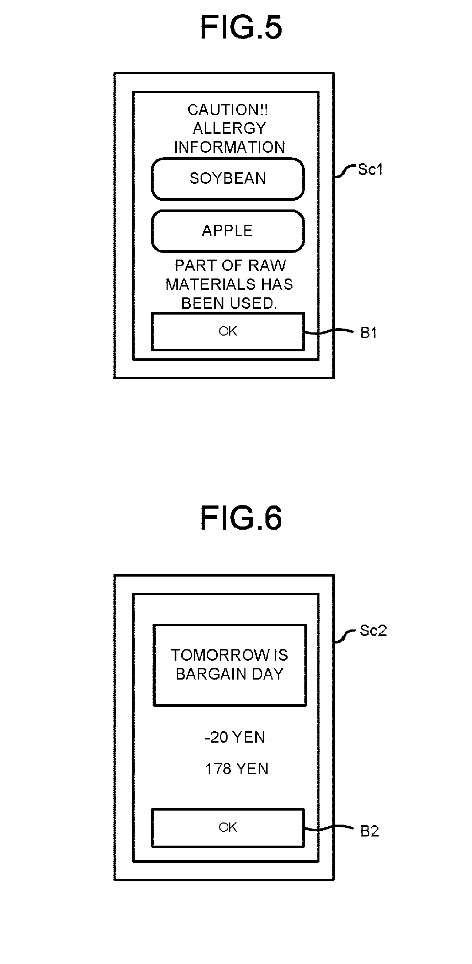

Fig. 5 is a diagram illustrating a display screen Sc1.

The display screen Sc1 is an example of a display screen on which a current file specified with the file path described in the association table 44a is displayed. The display screen Sc1 displays allergy information of one commodity. The allergy information is information relating to allergen contained in the commodity at the present time, and is the current information.

Further, as long as it is information relating to the commodity at the present time such as the nutritional component, the raw material, the manufacturer, the seller and the like, the current information is not limited.

The display screen Sc1 further includes an OK button B1.

Fig. 6 is a diagram illustrating a display screen Sc2.

The display screen Sc2 is an example of a screen on which future information of a future file specified with the file path described in the association table 44a is displayed. The display screen Sc2 displays bargain information of one commodity. The bargain information is planning information relating to a commodity on which a bargain is to be performed in the future, for example, tomorrow. So the future information means planning information.

In addition, as long as it is information relating to the commodity in the future such as the next arrival date, the renewal plan and the like, the future information is not limited.

The display screen Sc2 further includes an OK button B2.

The communication device 45 carries out communication through the internet 400. The communication device 45 can also communicate with the portable terminal 30 via the internet 400 and the mobile network 300.

As the hardware of the information processing apparatus 40, for example, a general server device, a computer device and the like can be used. Then, the information processing apparatus 40 can be obtained by installing a control program serving as an application program that is described in the later-described control processing in the auxiliary storage device 44 of the device, and by writing the association table 44a into the auxiliary storage device 44 of the device by a seller or operator of the device. At this time, the control program is recorded in a removable recording medium such as a magnetic disk, a magnetic optical disk, an optical disk, a semiconductor memory and the like, or distributed to the seller or the operator via the network. Further, the control program may be stored in the ROM 42.

Next, the operations of the commodity information displaying system 100 are described. Further, the content of processing described below is an example, and various processing that can obtain same effects can be carried out properly.

In the portable terminal 30, when an operation required to activate the application based on the control program stored in the auxiliary storage device 34 as stated above is carried out through, for example, the touch panel 36, the CPU 31 starts the control processing based on the control program.

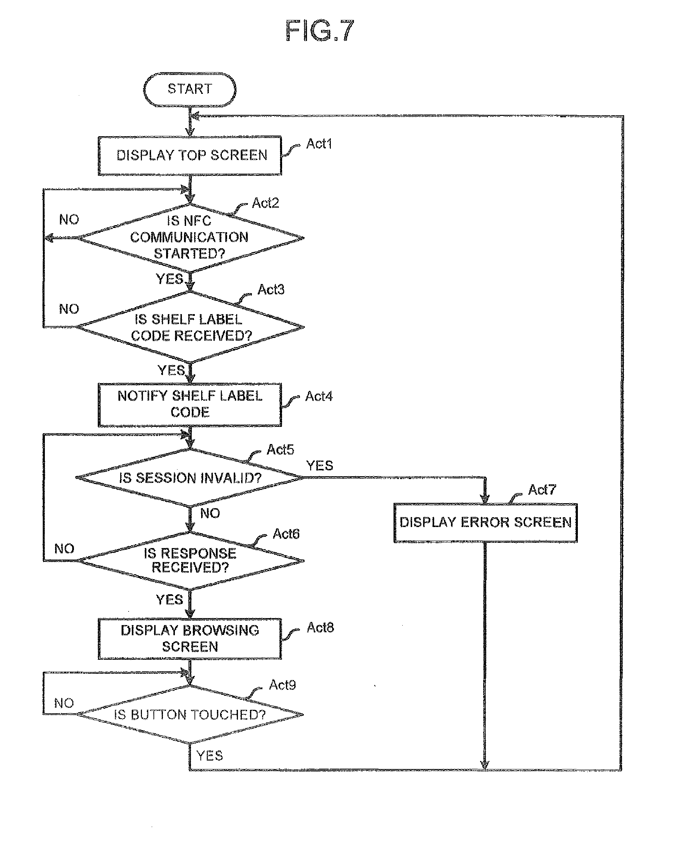

Fig. 7 is a flowchart illustrating the control processing by the CPU 31.

In ACT 1, the CPU 31 controls the touch panel 36 to display a predetermined top screen. Under the control of the CPU 31, the touch panel 36 displays the top screen. For example, the top screen is used to urge the customer to move the portable terminal 30 close to the shelf label device that is installed in the display shelf where commodities of which information is expected to be confirmed are displayed.

In ACT 2, the CPU 31 confirms whether or not the NFC communication of the NFC unit 35 is started. If NO is taken as the NFC communication has not been started yet, the CPU 31 repeats the processing in ACT 2. In this way, the CPU 31 waits until the NFC communication is started.

In a case of desiring to confirm the information of the commodity displayed in the store, the customer moves the portable terminal 30 close to the shelf label device 10 installed in the display shelf of the commodity. When the NFC unit 35 is moved close to the NFC unit 13, the shelf label code 14a stored in the memory 14 is sent from the NFC unit 13 wirelessly in the shelf label device 10 under the control of the shelf label controller 11. Then, the NFC unit 35 receives the shelf label code that is sent wirelessly as stated above. In this way, through the cooperation of the shelf label controller 11 and the NFC unit 13, function of a first transmission section is realized. Further, the NFC unit 35 is an example of a first reception section.

If YES is taken in ACT 2 when such a NFC communication is started, the CPU 31 proceeds to the processing in ACT 3.

In ACT 3, the CPU 31 confirms whether or not the data received through the NFC unit 35 is a shelf label code. In a communication using the NFC of the NFC unit 35, a data reception of data other than the shelf label code can also be carried out. Thus, the CPU 31 determines NO when the communication for other purposes is carried out and the shelf label code is not received, the CPU 31 returns to the waiting state in ACT 2. However, if the NFC communication with the shelf label device 10 as stated above is carried out and the shelf label code has already been received, the CPU 31 determines YES in ACT 3, and then proceeds to the processing in ACT 4.

In ACT 4, the CPU 31 notifies the information processing apparatus 40 of the shelf label code received as stated above. For example, this notification can be carried out by accessing the information processing apparatus 40 through the communication device 37 using a URL (uniform resource locator) including a path name containing the shelf label code and a host name used for specifying the information processing apparatus 40 via the internet 400. Alternatively, the notification may be carried out by transferring the shelf label code from the portable terminal 30 to the information processing apparatus 40 after the session of the portable terminal 30 and the information processing apparatus 40 is established, and the notification method is arbitrary. In this way, the communication device 37 is an example of a communication device that communicates with the information processing apparatus 40. Further, by executing the control processing based on the control program by the CPU 31, the computer taking the CPU 31 as a center part functions as a notification control module. Then, through the cooperation of the communication device 37 with the computer, the function of a first notification section is realized.

Further, if the information processing apparatus 40 is started, the CPU 41 starts the control processing according to the control program stored in the auxiliary storage device 44.

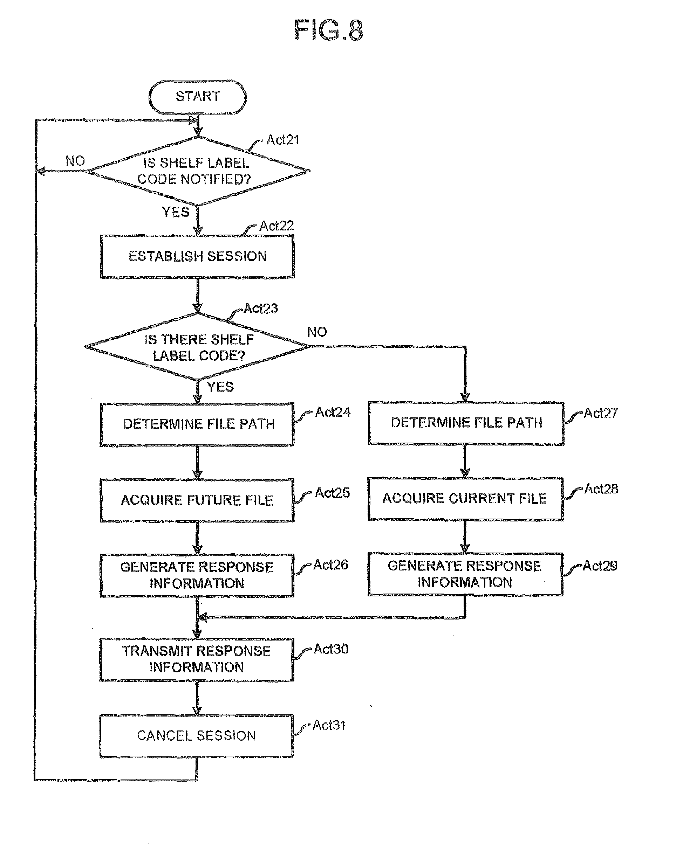

Fig. 8 is a flowchart illustrating the control processing by the CPU 41.

In ACT 21, the CPU 41 confirms whether or not the shelf label code is notified. Then, if NO is taken as the shelf label code has not been notified yet, the CPU 41 repeats the processing in ACT 21. In this way, the CPU 41 waits for until the shelf label code is notified in ACT 21. Then, if the shelf label code is notified from the portable terminal 30 as stated above, the CPU 41 determined YES in ACT 21, and proceeds to the processing in ACT 22.

In ACT 22, the CPU 41 establishes a session with the portable terminal 30.

In ACT 23, the CPU 41 confirms whether or not the notified shelf label code is contained in the association table 44b. Then, if YES is taken as the notified shelf label code is contained in the association table 44b, the CPU 41 proceeds to the processing in ACT 24.

In ACT 24, the CPU 41 determines a file path contained in a same data record and the notified shelf label code from the association table 44b.

In ACT 25, the CPU 41 acquires a future file specified with the file path determined as stated above, that is, a future file associated with the shelf label code. For example, in a case in which the content of the association table 44b is that as shown in Fig. 4, the CPU 41 acquires a future file specified with a file path "http: // · · · · · · · · · /futureA.htm" via the internet 400 when the shelf label code 'aaaaaaaa' is notified. In this way, by executing the control processing based on the control program by the CPU 41, the computer taking the CPU 41 as the center part functions as a part of an acquisition section.

In ACT 26, the CPU 41 generates response information including the future file acquired as stated above. Then the CPU 41 proceeds to the processing in ACT 30.

On the other hand, if NO is taken in ACT 23 as the notified shelf label code is not contained in the association table 44b, the CPU 41 proceeds to the processing in ACT 27.

In ACT 27, the CPU 41 determines a file path contained in a same data record as the notified shelf label code from the association table 44a. Further, it is assumed herein that all shelf label codes which can be notified are contained in the association table 44a. However, it may also be set that only parts of the shelf label codes which can be notified are contained in the association table 44a. In this case, if the CPU 41 determines NO in ACT 23, the CPU 41 confirms whether or not the notified shelf label code is contained in the association table 44a, and proceeds to the processing in ACT 27 only in a case in which it can be determined to be YES according to the confirmation result.

In ACT 28, the CPU 41 acquires a current file specified with the file path determined as stated above, that is, a current file associated with the shelf label code. For example, in a case in which the content of the association table 44a is that as shown in Fig. 3, the CPU 41 acquires a current file specified with a file path "C: ¥ · · · · · · · · · ¥CurrentB.htm" from, for example, the auxiliary storage device 44 when the shelf label code 'bbbbbbbb' is notified. In this way, by executing the control processing based on the control program by the CPU 41, the computer taking the CPU 41 as the center part functions as a part of the acquisition section.

In ACT 29, the CPU 41 generates response information including the current file acquired as stated above. Then the CPU 41 proceeds to the processing in ACT 30.

In ACT 30, the CPU 41 controls the communication device 45 to transmit the response information generated in ACT 26 or ACT 29 to the portable terminal 30 through the session established in ACT 22. In this way, the future information or the current information, which is associated with the shelf label code for recognizing the shelf label device 10 moved close to the portable terminal 30, is notified from the information processing apparatus 40 to the portable terminal 30. In this way, by executing the control processing based on the control program by the CPU 41, the computer taking the CPU 41 as the center part functions as a transmission control section. Further, through the cooperation of the communication device 45 with the computer taking the CPU 41 as the center part, the function of a second notification section (notification section) is realized.

In ACT 31, the CPU 41 cancels the session established in ACT 22. Then the CPU 41 returns to the waiting state in ACT 21.

If the response information is transmitted to the portable terminal 30 through the internet 400 and the mobile network 300, the communication device 37 receives the response information, and then the received response information is written into the auxiliary storage device 34.

On the other hand, in the portable terminal 30, the CPU 31 proceeds to the processing in ACT 5 after notifying the shelf label code in ACT 4 in Fig. 7.

In ACT 5, the CPU 31 confirms whether or not the session established according to the notified shelf label code in ACT 4 is invalid. Then, the CPU proceeds to the processing in ACT 6 if NO is taken as the session is established directly.

In ACT 6, the CPU 31 confirms whether or not the response information transmitted from the information processing apparatus 40 as stated above is received by the communication device 37. Then the CPU 31 returns to carry out the processing in ACT 5 if NO is taken as the response information has not been received yet.

In this way, the CPU 31 waits for until either the session becomes invalid or the response information is received in ACT 5 and ACT 6. Then, if the response information is not received and the session becomes invalid, the CPU 31 determines YES in ACT 5, and then proceeds to the processing in ACT 7.

In ACT 7, the CPU 31 controls the touch panel 36 to display a predetermined error screen. For example, the error screen is a screen for notifying the customer that the commodity information cannot be displayed due to occurrence of abnormality. The CPU 31 enables the touch panel 36 to display the error screen for a predetermined given period or a period until an operation instructing the ending of display of the error screen is performed through the touch panel 36 and the like. Then, if the period during which the error screen should be displayed elapses, the CPU 31 returns to the processing in ACT 1 to repeat the same processing as stated above. In this way, the touch panel 36 transmits to a state of displaying the top screen, and thus the display of the error screen is ended.

When in the waiting state in ACT 5 and ACT 6, the CPU 31 determines YES in ACT 6 and proceeds to the processing in ACT 8 if the response information is received by the communication device 37 as stated above.

In ACT 8, the CPU 31 controls the touch panel 36 to display a display screen on which the current file or the future file contained in the response information is displayed. Specifically, it is considered that the current file and the future file are, for example, HTML files defining the display screens Sc1 and Sc2 as shown in Fig. 5 and Fig. 6. Then, in this case, the CPU 31 expands the display screen based on the current file or the future file to display it on the touch panel 36. In this way, by executing the control processing based on the control program by the CPU 31, the computer taking the CPU 31 as the center part realizes the functions of a display section through the cooperation with the touch panel 36.

In ACT 9, the CPU 31 confirms whether or not the OK buttons B1 and B2 arranged in the display screen are touched. Specifically, the CPU 31 confirms whether or not the position information in the area of the OK button B1 when the display screen Sc1 is being displayed is output from the touch panel 36 and whether or not the position information in the area of the OK button B2 when the display screen Sc2 is being displayed is output from the touch panel 36. Then the CPU 31 determines NO if the position information is not output, and repeats the processing in ACT 9. In this way, the CPU 31 waits for until the OK buttons B1 and B2 are touched in ACT 9. Then the CPU 31 determines YES in ACT 9 and returns to the processing in ACT 1 when it can be confirmed that the OK buttons B1 and B2 are touched according to the output of the position information.

As stated above, the commodity information display system 100 displays a display screen on which information relating to a commodity with which the shelf label device 10 is associated on the portable terminal 30 if the customer moves the portable terminal 30 close to the shelf label device 10. Then, if there is future information relating to the commodity mentioned above, it is assumed that the future information is displayed in the display screen. Thus, the customer can obtain information of the commodity in the future, and it is possible for the customer to determine to purchase the commodity at the present time or to purchase it in the future according to the obtained future information.

As a secondary effect of the commodity information displaying system 100, it is possible to urge the customer to come to the store again in the future. That is, for example, by prompting bargain information in the future as the future information like the display screen Sc2, the customer who desires to purchase a commodity at the bargain price will come to the store again on the bargain day. That is, the screen in which bargain information in the future is displayed is an example of a screen for motivating the customer who glances the screen mentioned above to come to the store again in the future.

In accordance with the commodity information displaying system 100, as the NFC communication is adopted between the shelf label device 10 and the portable terminal 30, after the given applications are started in the portable terminal 30, the customer only needs to move the portable terminal 30 close to the shelf label device 10 without carrying out laborious operation for displaying commodity information.

As to the present embodiment, the following various modifications are possible.

In a case in which the notified shelf label code is contained in both the association table 44a and the association table 44b, the CPU 41 may also transmit the response information including both the current information and the future information. Then, the CPU 31 may enable the touch panel 36 to display a display screen in which both the current information and the future information are displayed, or enable the touch panel 36 to switch and separately display the display screens in which the current information and the future information are respectively displayed.

The shelf label management device 20 and the information processing apparatus 40 may be integrated in a single server device.

As the recognition information of commodity, various kinds of codes such as the JAN (Japanese article number) code can be used instead of the shelf label code.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. An information processing apparatus for a commodity information display system comprising and a portable terminal, a shelf label device to be installed in display shelve which displays a commodity, the shelf label device comprising a notification section which notifies the information processing apparatus of a recognition code, comprising:
a first storage section configured to store current information associated with the recognition code, the current information representing the information of a commodity at the present time,
a second storage section which stores future information associated with a recognition code, the future information representing information of a commodity in the future,
an acquisition section configured to acquire, when the recognition code is notified from the portable terminal, at least the future information if the second storage section stores the future information associated with the recognition code notified by a notification section, and acquire the current information if the current information if the second storage section stores no future information associated with the recognition code notified by the first notification section and stores the current information associated with the recognition code notified by the first notification section, and
a notification information configured to notify the portable terminal of the information acquired by the acquisition section.

2. A commodity information displaying system, comprising:
a shelf label device configured to be installed in display shelve which displays a commodity;
a portable terminal; and
an information processing apparatus according to claim 1, wherein
the shelf label devices comprising:
a recognition code storage section which stores a recognition code corresponding to the commodity, and
a first transmission section which transmits the recognition code stored in the recognition code storage section to the portable terminal,
the portable terminal comprises:
a first reception section which receives the recognition code transmitted by the first transmission section, and
a first notification section which notifies the information processing apparatus of the recognition code received by the first reception section,
and,
the portable terminal further comprises a display section which displays a screen based on the information notified by the second notification section.

3. The commodity information displaying system according to claim 2, wherein
the acquisition section respectively acquires the current information and the future information if the current information and the future information are respectively associated with the recognition code notified by the first notification section.

4. The commodity information displaying system according to claim 2 or 3, wherein
the first transmission section transmits the recognition code wirelessly when the portable terminal is adjacent to the shelf label device provided with the first transmission section.

5. The commodity information displaying system according to any one of claims 2 to 4, wherein
the future information is information that can enable a screen on which it is displayed through the display section to be a screen motivating the customer who glances the screen to come to the store again in the future.

6. An information processing method, comprising:
a first storage step of storing current information associated with a recognition code, the current information representing the information of a commodity at the present time,
a second storage step in which future information associated with a recognition code is stored, the future information representing information of a commodity in the future,
an acquisition step of acquiring, when the recognition code is notified from a portable terminal, at least the future information if the future information associated with the notified recognition code is stored at the second storage step, and acquiring the current information if the current information if no future information associated with the notified recognition code and the current information associated with the recognition code notified by the first notification section are stored at the second storage step, and
a notification information step of notifying the portable terminal of the information acquired at the acquisition step.
